# EUROPEAN PATENT APPLICATION

(11) **EP 3 772 029 A1**
(43) Date of publication of application: **03.02.2021**
(21) Application number: 19189469.0
(22) Date of filing: 31.07.2019
(51) Int. Cl.: G06Q 10/06, G06Q 50/12

(54) **METHOD AND APPARATUS FOR ASSIGNING ROOMS TO RESERVATIONS IN HOTELS**

(71) Applicant: Ciaomanager Srl, 38123 Trento (TN) (IT)
(72) Inventor: Battiti, Filippo, 38123 Trento (IT)

(57) **Abstract**

The present disclosure provides methods and devices for assigning ("fixing") room numbers to reservations by customers in hotels in an automated manner in order to maximize the final occupancy rate and the related profit, while avoiding changes of rooms during a stay of the customer at the hotel.

The method includes: a database registering all accepted reservations which have not been cancelled, a separate memory storage for all days in a future horizon (typically one year or more, as decided by the hotel owner) counting the total number of rooms of a specific type already requested for the specific day, a procedure to decide about accepting or rejecting a future reservation in order to avoid inevitable overbooking, an optimal method for assigning room numbers to accepted reservations which guarantees the best possible occupancy rate and the complete absence of overbooking.

Because the final occupancy rate (number of rooms sold in each day) is related to the profit made by the hotel, the disclosed invention guarantees to reach higher levels of profit (on average) by avoiding a painful, slow and error-prone manual allocation of rooms, avoiding unwanted overbooking, avoiding having customers to change rooms during their stay.

## Description

### BACKGROUND OF THE INVENTION

### Field of the invention

The present invention relates to a method and apparatus for improving and automating the assignment of room numbers (physical rooms) to individual reservations, in order to maximize occupancy rates, particularly but not exclusively in the hotel and travel industry for the assignment of hotel rooms corresponding to a given type of rooms, etc.

### Description of Prior Art

The hospitality industry is very competitive, and the profitability of the industry is not very high. In order to increase profits in the hospitality industry, the appropriate management of available resources is critical. Available resources in the hospitality industry include rooms in which guests sleep.

Assigning room numbers corresponding to the different reservations is a daily activity in hotels. In some cases, this fixation is delegated to desk personnel. When computers did not exist, this activity was done by hand, on paper, or with the support of mechanical devices, like the old "room rack" in US103066. More recently, this activity is often mediated by computers and databases, given the advent of modern tourism information and reservation systems like the one disclosed in EP 0 846 301 B1.

EP0306965A2 discloses a method of prospectively planning utilization of a multiplicity of related resources using a computer having a memory. EP 0 484 362 B1 discloses a method for assigning data records to times in a time sequence, which can be used to substitute paper or mechanical devices with a computer-based "room plan" (detailed assignment of the received reservations to specific rooms, usually characterized by a room number (or other ways of identifying a specific physical room in a unique way).

In addition to direct reservations received by phone, in person, or by email (606), in many cases to choice of specific rooms to associate to a particular reservation (called "room assigning" in our invention) is delegated automated connections with channel manager systems (602) receiving input from Online Travel Agencies (604), booking engines (605) and other external sources, so that a reservation is assigned a room number immediately after receiving it.

In some cases, a painful reallocation of the room numbers is executed from time to time by the more expert employees in a kind of "room tetris" or "room candy crush" game), with the objective to create larger gaps - sets of contiguous days in a specific room - and free space to accept longer reservations even in close-to-fully-booked conditions. In many hotels the rooms are categorised and priced according "room types", depending on number of beds, type of beds, number of occupants, amenities, luxury level, specific furnishings or features. The use of "room types" (or room categories) is usually associated to marketing strategies based on market segmentation. A type is therefore related to physical characteristics but does not coincide with a physical classification. It is not unusual to have type boundaries moving between similar physical rooms. This strategy is like the one used by the airline industry, in which the subdivision between business or economy seats can be regulated by a curtain which can be moved at will. The usual marketing and sales strategies will direct the less price-sensitive customers to the most expensive types and more price-sensitive ones to the basic and less expensive types. The proper adjustment of prices or availability for the different types is a topic studied and applied in Revenue Management, like the method disclosed in US 8,321,286 B2. In some cases, a single type can be sold with prices corresponding to different occupancy.

This invention regards a different and complementary point of view with respect to the previous state of the art and it is concerned with an aspect which is often neglected: the detailed allocation of guests to individual rooms, after a reservation request for a specific room type is received and accepted, possibly after following business rules and rules obtained by Revenue Management systems (609). As such the present invention can be used in combination with Revenue Management strategies or completely independently of them, even if the hotel does not use any revenue management software and system.

### SUMMARY OF THE INVENTION

Current practices in marketing and sales for the hospitality sector are based on the concept of room types or room categories, which define the products actually sold to customers. Selling a room type instead of a specific room gives flexibility in allocating guests to specific rooms, including the possibility to change types at check-in depending on hotel strategies. Nonetheless, there are still many hotels which are allocating guests to specific rooms immediately after reservation. This can happen because allocation is done by hand at reservation or because of a sub-optimal connection with a channel manager (systems to connect various sales channels in an automated manner), which is immediately assigning the room after a reservation requests arrives. In this invention we disclose different room allocation strategies and systems, in particular automated ones embodied in computing equipment and communication means, by defining a set of possible methods and some possible embodiments. The smart allocation methods and systems can greatly reduce the rejection rate (reservation requests which cannot be fit into the hotel room plan) and improve the occupancy level, the percentage of available rooms or beds sold for the various periods. Provided that no reservations leading to single-day overbookings are accepted, our invention can accommodate all reservations. Given that the performance difference is particularly significant in high-season and high-request periods, periods which are usually associated to higher rates and higher volumes, the main financial performance indicators like RevPAR (Revenue Per Available Room) are also affected by an even bigger multiplier, depending on the hotel pricing policy.

### BRIEF DESCRIPTION OF DRAWING

These and other aspects and advantages of embodiments of the present disclosure will become apparent and more readily appreciated from the following descriptions made with reference to the accompanying drawings, in which:
Fig. 1 (Outcomes of the request/reservation process) is a flow chart of the customer reservation protocol considered by the disclosed invention, detailing the message interchange between the customer and the hotel and the possible outcomes of such protocol.
Fig. 2 (an example of a room plan (10 rooms of the same type) shows a typical room planning chart as maintained by a PMS. Fig. 3 and Fig. 4 clarify the definition of inevitable and avoidable overbooking, therefore identifying the cases in which the proposed methods can be applied.
Fig. 3 (Inevitable overbooking): in a 2-room hotel, the night of day 3 has three active reservations (reservation 2 is checking in (302), the other two are ongoing (301) and (302)). In this case, no policy will be able to accommodate all reservations.
Fig. 4 (Avoidable overbooking): in a 2-room hotel, if reservations 1 (401) and reservation 2 (402) have already been fixed to different rooms, then there is no place left to accommodate Reservation 3 (403). Notice that the maximum number of simultaneously active reservations is 2; therefore, the optimal technique in this invention would have been able to accommodate them.
Fig. 5 shows the result of the application of one of the proposed methods to a set of hotel reservations. In the example illustrated in Fig. 5 (Seven-day slices in the OptimalRoomAssignment allocation technique) . On day 1, all rooms are empty, so all reservations checking in on the first date can be accommodated (left part of Fig. 5). On date d, all reservations checking in on earlier dates have been allocated (thick-bordered rectangles), leaving enough room for all reservations checking in on date d (right part of Fig. 5).
Fig. 6 is a block diagram illustrating the components of a device that embodies the present disclosure.
Fig. 7 (Reservation acceptance decision process) and Fig. 8 (Reservation allocation process - the OptimalRoomAssignment system) represent the disclosed method by means of flowcharts.

### DETAILED DESCRIPTION OF THE INVENTION

Reference will now be made in detail to exemplary embodiments, examples of which are illustrated in the accompanying drawings, in which the same or similar reference numbers throughout the drawings represent the same or similar elements or elements having same or similar functions. Embodiments described below with reference to drawings are merely exemplary and used for explaining the present disclosure and should not be understood as limitation to the present disclosure.

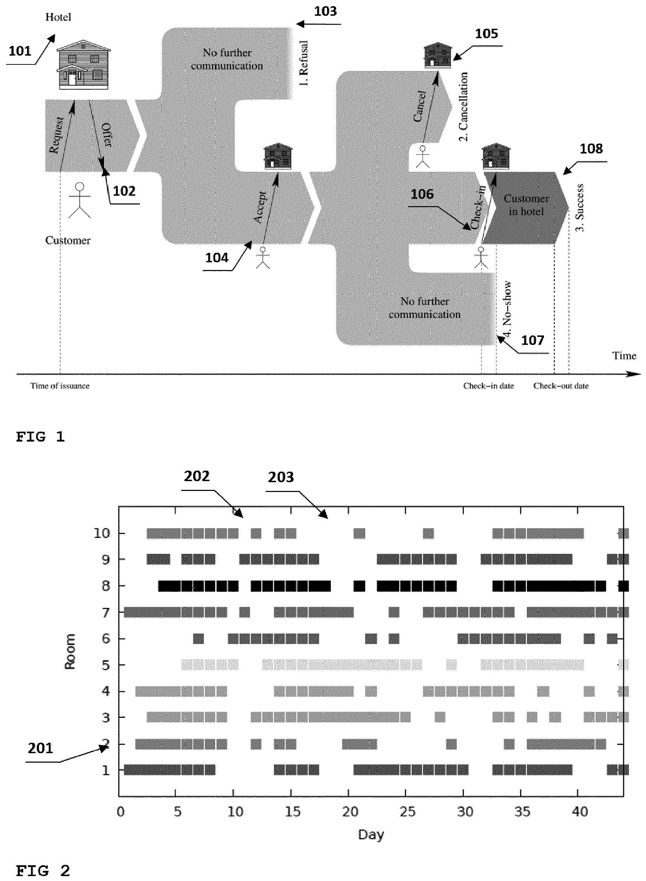

An effective procedure and apparatus need to consider current ways of reserving rooms, which happen more and more though electronic means, in particular through hotel booking engines inserted into hotel websites or through collaborating Online Travel Agencies (OTAs), where the potential customers can issue requests, obtain availability and prices and reserve in a self-service manner. Our model is designed to capture this common reservation protocol as represented in Fig. 1, where a customer issues a reservation request with some parameters (e.g., check-in and check-out date, number of rooms...) (101) and the hotel responds with a price offer (102); the customer can implicitly refuse the offer by not issuing any further communication (103), or accept it (104) with the option of cancelling it at a later date (105), checking in (106) or simply avoid showing up (107).

The technical solutions in embodiments of the present invention are hereinafter described clearly and completely with reference to accompanying drawings in embodiments of the present invention. Apparently, embodiments described are a part of embodiments of the present invention, but not all embodiments. All other embodiments obtained by those skilled in the art based on the embodiments in the present invention without creative labour shall fall in the protection scope of the present invention. Terms such as "first", "second" and the like used in the specification, in claims and in drawings are configured herein for distinguishing different subjects, but not for showing a particular sequence. Furthermore, the terms such as "include", "comprise" and any other variations thereof are intended to be non-exclusive. For example, a process, a method, a system, a product or a device including or comprising a sequence of blocks or units is not limited to include or comprise the listed blocks or unit, instead, they alternatively further include or comprise other blocks and units that are not listed or alternatively further include inherent blocks or units of the process, the method, the system, the product or the device.

Term such as "embodiments" referred in the present disclosure means that, particular features, structures and characteristics described in combination with embodiments may be covered in at least one embodiment of the present disclosure. Usages of the term for many times in the specification are not necessary to refer to a same embodiment or same embodiments, and they are not independent embodiments mutually exclusive with other embodiments or unimportant embodiments. It may be explicitly or implicitly understood by those skilled in the art that, embodiments described herein can be combined with other embodiments.

The invention described in embodiments of the present disclosure may include various devices having CPU, RAM memory, external memory, communication functions, portable devices, a vehicle-mounted device, a wearable device, a computing device or other processing device connected to a wireless modem, various forms of user equipment (UE), terminal devices and the like. For ease of description, the abovementioned devices are collectively referred to as "room fixation system".

Embodiments of the present disclosure will be described in detail below.

In describing embodiments of the present invention, we assume that hotels do not accept overbookings (selling more rooms than those available for each day) and allocate guests so that they are not forced to move between different rooms after their arrival. Those skilled in the art will be able to use the current invention also for hotels accepting a certain level of overbooking, by adding additional "overbooked rooms" - not corresponding to any physical room - where to place the overbooked reservations.

It is often the case that, when the hotel reaches a certain occupancy level, some gaps (free rooms) in the individual room plan are still present but they are scattered among different rooms. Examples of gaps are (202) and (203) in the illustrative room plan of Fig.2. If a reservation request for more than a day arrives, the probability to find a sufficiently wide contiguous slot - a sufficiently wide gap - can be small and the request must be rejected. In these high-occupancy situations some hotels close availability on OTAs (604) and booking engines (605) to avoid possible overbookings and try to sell directly (606) the remaining gaps, therefore losing potential reservations and profit arriving via (604) and (605).

In other cases, minimum-stay requirements are defined to avoid that some early-arriving short-stay reservations ruin the possibility to accept long reservations in the future. For example, a touristic hotel aiming at long-staying tourists (e.g. selling snow weeks) but also at business customers interested in short stays, can place a minimum-stay requirement of 3 days at the beginning of the season. The minimum-stay requirement can be relaxed or eliminated for the last days before a given target date (with a kind of "last-minute" policy) to target business travellers for selling the remaining gaps. Minimum-stay requirements alleviate the problem of conflicts between short and long reservations but cause lost profits because potential reservations rejected by the minimum-stay requirements could have been accepted.

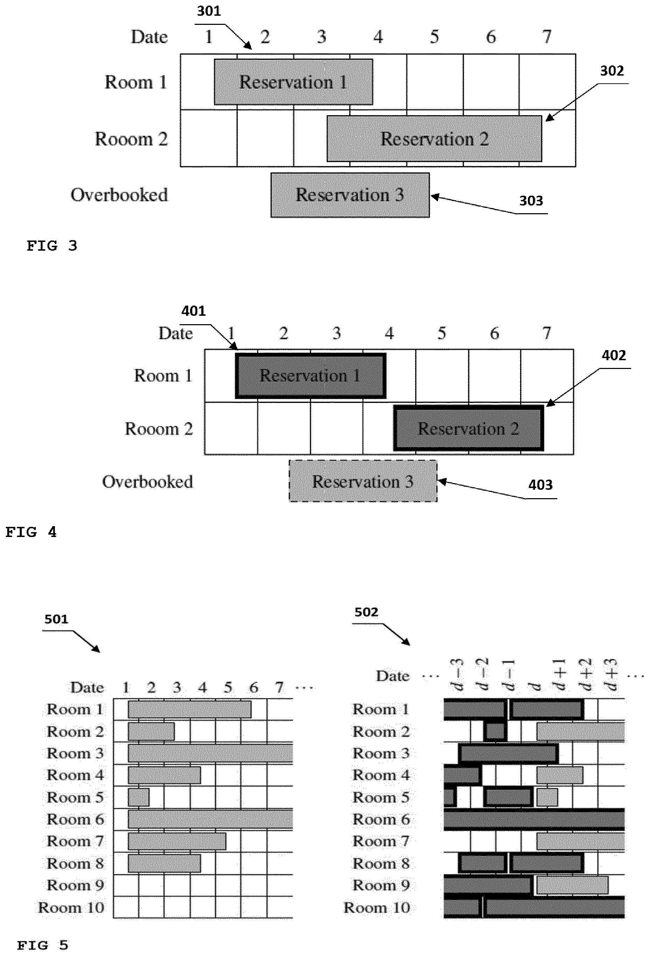

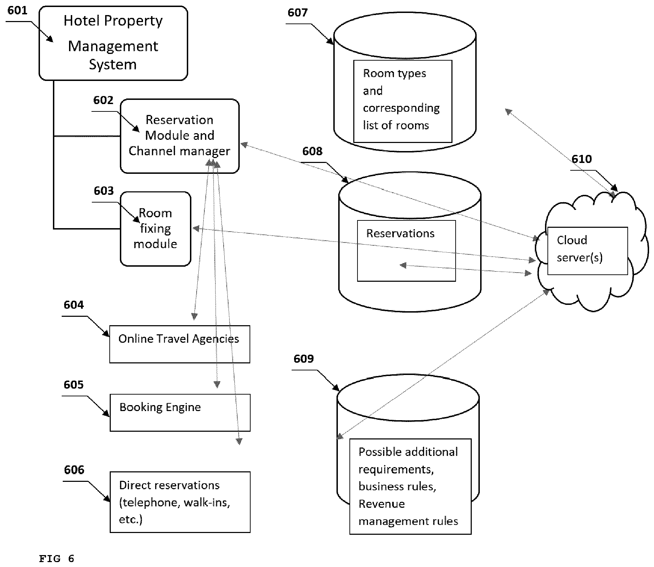

In this invention we design automated processes, supported by suitable equipment as described in the block diagram of Fig. 6. We disclose an optimal method and apparatus, which is optimal in the case of rules for accepting reservation requests which are not causing inevitable overbooking. Overbooking is inevitable if at least a single day occurs in a number of accepted reservations with a multiplicity larger than the total number of available rooms, as described in Fig.3 for the simplified case of an hotel with 2-rooms. The night of day 3 has three active reservations: reservation 2 is checking in (302), the other two are ongoing (301) and (302). In this case, no policy for assigning room numbers in a different way will be able to accommodate all reservations. If an inevitable overbooking happens, no strategy is capable to resolve the overbooking with a different room fixation.

On the contrary, Fig.4 shows an example of an avoidable overbooking in a 2-room hotel. If reservations 1 (401) and reservation 2 (402) have already been fixed to different rooms, then there is no place left to accommodate Reservation 3 (403), but the maximum number of simultaneously active reservations is 2; therefore, the optimal technique in this invention would have been able to accommodate them, by fixing reservation2 into room 1, and creating a wider gap in room2 for fixing reservation3. This simplified case can be easily solved by hand, but the situation becomes extremely difficult to sole by hand for many rooms and for a mixture of long and short reservations.

To avoid superficial complications related to nights located between two days, without loss of generality, we assume that an hotel sells individual days. Each reservation Res is therefore characterized by: a generation date ResGen (the date in which the reservation request is received by the hotel), a start day ResStart and an end day ResEnd. A one-day stay is therefore represented by a situation in which ResStart is equal to ResEnd. The duration of a reservation is therefore: (ResEnd-ResStart +1). The current method can be easily extended to consider reservations arriving and different times (hours, minutes, ...) during a day, we limit consideration to days because it is sufficient to identify the relevant characteristics of the invention. We assume that the complete state of the hotel with respect to received reservations is summarized by a RoomPlan matrix like that described in Fig.2, with nrooms rows, and ndays columns. The content of each memory cell: RoomPlan[room][day] is equal to 1 if the given room is occupied at the given day, 0 if it is free. An example of a RoomPlan for an hotel with ten rooms associated to a type is shown in Fig. 2. The situation is for a high occupancy level: only a limited number of fragmented gaps are present to fix additional long-stay reservations (of course, 1-day reservations can always be placed in free gaps, the problem arises for longer reservations).

Different and more intelligent methods are designed following the "greedy" principle: each reservation is allocated with some short-sighted optimization in mind, but after a reservation is fixed to a room it is never relocated in the future. We disclose three methods following the "greedy" principles: ImmediateFirstFit, ImmediateMinSlack, ImmediateMaxSlack.

ImmediateFirstFit methods: As soon a reservation request is received, the rooms are considered in fixed order, from room 0 to room nrooms-1. The reservation is allocated to the first available room (a room is available if free for all reservation days) . If no room is available, the reservation request is rejected. The rationale for this approach is to try and fill rooms sequentially, aiming at minimizing the total number of rooms used (those with at least one reservation) . It sounds plausible that more rooms will remain available for additional reservations with respect to a random or inattentive fixation.

Another greedy method is based on avoiding "fragmentation" of contiguous days, while aiming at maintaining large gaps between reservations. Having large gaps means that there will be more contiguous days to allocate future long-duration stays. Let's define as "slack" around a reservation the number of free days immediately following or preceding the given reservation. E.g., a slack of three means that the three preceding days and the three following days are free. If the number of free preceding days is different from the number of free following days, the slack is the minimum of the two quantities. For example, if there are five free preceding days and three following free days the slack is three.

ImmediateMinSlack method: As soon a reservation request is received, all rooms are considered. Among the available rooms, the reservation is placed in the room which minimizes the slack around the reservation. If no room is available, the reservation request is rejected. A qualitative physical analogy for this procedure is that reservations "attract" each other through a force which decreases with the distance between two reservations. The equilibrium position is at the room which minimizes the distance with respect to the existing reservations.

A second greedy way to reduce fragmentation of free space is to maximize the slack around a reservation, ideally placing a new reservation immediately attached (or almost) to other existing reservations, again leaving other large contiguous spaces free for placing long-duration stays.

ImmediateMaxSlack method: As soon a reservation request is received, all rooms are considered. Among the available rooms, the reservation is placed in the room which maximizes the slack around the reservation. The minimum of the left and right slack is considered. If no room is available, the reservation request is rejected. The physical analogy is that reservations repel each other. The above methods fix reservation requests as soon as they arrive. This early fixation permits to answer future reservation requests without the doubt that they cannot be fixed into the room plan. Unfortunately, none of the above strategies is optimal for all possible distribution of requests in time.

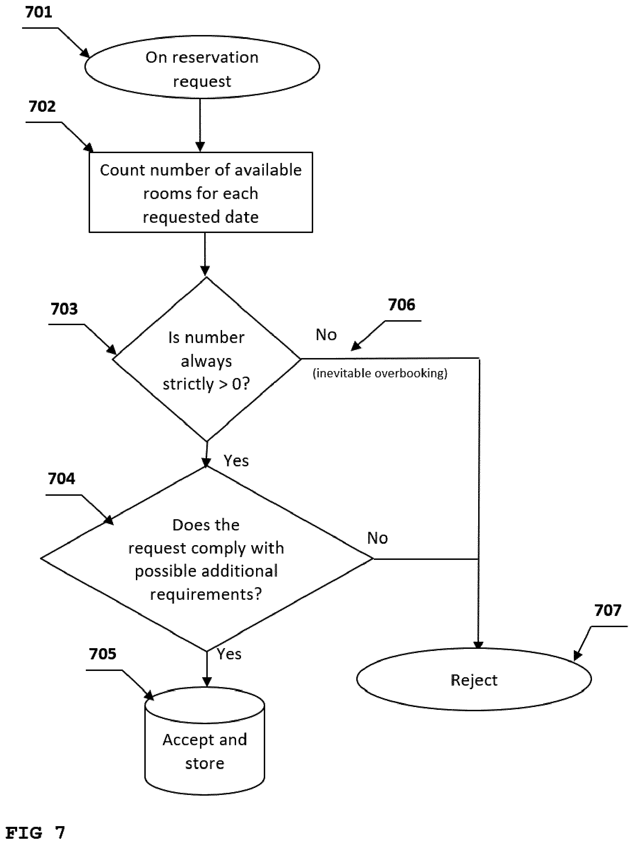

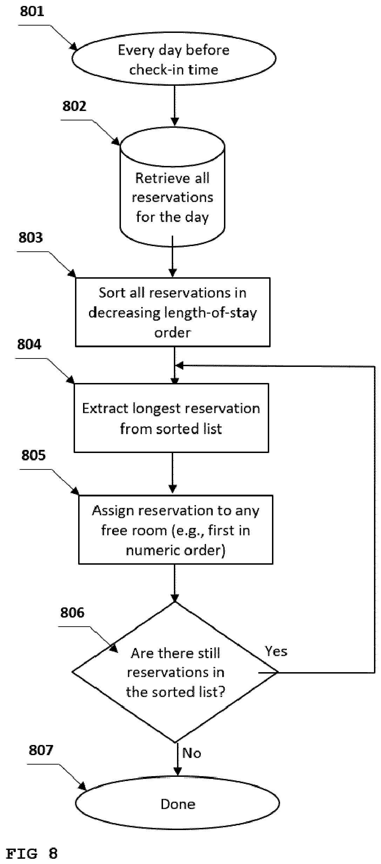

Let's now disclose a different strategy: reservation requests are accepted if and only if they do not create inevitable overbookings, but they are not fixed to specific rooms until the customer checks in. The possible acceptance of requests is easy to check: for each day, one counts how many reservations include it (what is the total request of rooms). If the total request of rooms of the given type is less than the total number of rooms for all days in a request, the request is accepted, otherwise it is rejected. It looks like this criterion is clearly necessary to accept a new reservation without creating overbookings, but not sufficient to guarantee that a sufficient gap of contiguous days will be available after assigning other reservations. In fact, the "no inevitable overbooking" acceptance method is not sufficient for all previous methods. But the following room-fixation method guarantees that the above criterion is both necessary and sufficient. OptimalRoomAssignment method: with reference to Fig. 7, when a reservation request is received (701), it is first checked against room availability in the period (702). If at some day between check-in and checkout (703) the number of existing reservations is equal to the number of rooms, then an inevitable overbooking condition would occur upon accepting the reservation, which is therefore rejected (706). Otherwise, after checking compliance with possible additional business rules and revenue management rules (609, 704), the reservation is accepted (705). Accepted reservations are just stored into the device's long-term storage (e.g., the database). Reservations are fixed to specific rooms only when the check-in day arrives, and a trigger expires by the procedure detailed in Fig. 8. At check-in day (801), reservations for the day are retrieved from the long-term storage (802) and are sorted in order of their duration (longer duration first, 803). Among the available rooms, reservations are placed in the first available room (804). If no room is available, the reservation request is rejected (however, if no inevitable overbooking is allowed, this should never be the case). The allocation system is repeated (805) until all reservations are allocated (806). Let's note that no assumption about knowing all future reservations is done in this technique. In addition, assigning rooms only at check-in time makes sense as it is the latest possible moment, when the final state of confirmed reservations is known, i.e., when all reservations and cancellations for the day have been received.

We now disclose the optimality of the OptimalRoomAssignment method. Consider a set of reservations with varying check-in date and varying length of stay. In this embodiment we consider the standard practice in hotels to define a reservation from its check-in and check-out dates. Each reservation occupies a room for a number of days ranging from its check-in date to the check-out day (non inclusive). If, on a given date, more rooms are occupied than available, then no matter how smart the allocation technique- a reservation must be rejected. Otherwise one creates an inevitable overbooking: like (303) in Fig. 3. Inevitable overbooking can be prevented by ensuring that, for each date, the number of ongoing reservations (having checked in earlier but checking out later) plus the number of checking in reservations does not exceed the total number of rooms. Consider, however, the case in Fig. 4: the overbooking (403) is not inevitable, since no more than two reservations are active on the same date. In this case, unfortunately, two reservations have already been allocated to different rooms, leaving no possible solution for Reservation 3 (403). If the OptimalRoomAssignment technique had been employed, Reservation 3 would have been allocated before Reservation 2. In fact, if no dates have more ongoing reservations than rooms, the OptimalRoomAssignment technique always ensures full allocation of existing reservations.

To see this, let us proceed day by day. On the first day, d = 1, the hotel is empty, no room has been allocated yet. Therefore, we can take all checking in on day d = 1 (we know that they are less than the number of rooms, otherwise we would have inevitable overbooking since the first day) and allocate them, as shown in the left part (501) of Fig. 5. Consider now any later date d > 1; suppose that all reservations checking in up to date d -1 have been successfully allocated, as shown in the right-hand side (502) of Fig. 5. Since there is no inevitable overbooking, the number of reservations checking in on date d cannot exceed the number of rooms that are left free by ongoing reservations. Moreover, since the allocation technique proceeds by increasing check-in date, if a room is free on date d it is granted to be free on all subsequent dates, because later reservations have not been allocated yet. Therefore, all reservations starting on date d can be allocated. At this point, we can apply the induction principle: Because all reservations checking in on dates up to d (inclusive) have been successfully allocated, the same reasoning above assures us that all reservations checking in on date d +1 can be allocated, and so on. Therefore, all reservations are allocated to specific rooms without any overbooking. The OptimalRoomAssignment methods therefore shares simplicity of implementation, meaningfulness (one is assigning room at the latest possible moment, when the fate of reservations is finalized and possible cancellations already occurred) and a property that, assuming no inevitable overbooking is accepted by the hotel the room fixation is optimal, leading the best possible occupancy rate. Finally, the room fixation is delegated to computer systems without headaches and time lost in the process.

The fact that the disclosed OptimalRoomAssignment invention can accommodate all reservations provided that no overbooked days are accepted) gives a clear operating suggestion to the hotel manager: the room assignment can be left to this optimal method and apparatuses at check-in time, with a guarantee of unbeatable and optimal performance.

## Claims

1. A method for assigning room numbers in an hotel (or similar hospitality businesses like camping, bed and breakfast), including:
(a) a database (607) registering all accepted reservations which have not been cancelled,
(b) a separate memory storage for all days in a future horizon (typically one year or more, as decided by the hotel owner) counting the total number of rooms of a specific type already requested for the specific day,
(c) a procedure to decide about accepting or rejecting a future reservation in order to avoid inevitable overbooking (Fig. 7),
(d) an optimal method "OptimalRoomAssignment"(603) for assigning room numbers to accepted reservations which guarantees the best possible occupancy rate and the complete absence of overbooking (Fig. 8).

2. The room assignment method in Claim 1 further comprising service applications in the cloud (610) and interconnected by the internet.

3. The room assignment method in Claim 1 in which additional modules correspond to Booking Engine (605) for direct reservations at the hotel website and/or Channel manager (602) connecting online travel agencies is integrated

4. The room assignment method in Claim 1 in which additional modules correspond to revenue management systems (609) and additional business logic to filter the reservation requests before they are handled by the "room assignment" module (603) and additional heuristic methods ("ImmediateFirstFit, ImmediateMinSlack, ImmediateMaxSlack").

5. The room assignment method in Claim 1 in which overbookings are accepted by artificially increasing the number of rooms available in each room type, depending on the accepted level of overbooking.

6. The room assignment method in Claim 1 for hotels having more than one type of rooms with a provision to allow upgrades. The hotel can upgrade and offer a high-price room to the customer, which given an even large flexibility to fix rooms by shifting customers to other compatible types.

7. An apparatus comprising a client application (603) and interconnected to suitable storage devices (607), (608), (609), **characterised in that** the "room assignment system" comprises:
(a) at least one method to receive customer requests, characterized at least by check-in and check-out days, type of requested room
(b) a storage equipment to save accepted reservations
(c) a procedure running in computational processor for counting the total number of days for rooms of each possible room type corresponding to all accepted reservations
(d) a procedure running in computational processor for deciding about the acceptance of a reservation depending on the total number of days already accumulated in point (c), in order to eliminate inevitable overbookings (overbooking which cannot be avoided by assigning different rooms to the various reservations, as described in Fig. 3).
(e) a trigger system which activates the "room assignment procedure" (603) described in Fig. 8 when the check-in date corresponds to the current date
(f) a method (603) to fix the specific rooms (identified by numbers or by similar means) corresponding to the valid reservations, in order to allocate in an optimal manner all reservations without creating avoidable overbookings
(g) integration and communication of the results from room assignment to the other elements in the hotel management system, like a Property Management System

8. The apparatus in Claim 7 further comprising service applications in the cloud (610) and interconnected by the internet.

9. A computer system according to Claim 1 in which additional modules correspond to Booking Engine (605) for direct reservations at the hotel website and/or Channel manager (602) connecting online travel agencies is integrated

10. The apparatus in Claim 7 in which additional modules correspond to revenue management systems (609) and additional business logic to filter the reservation requests before they are handled by the "room assignment" module (603)

11. The apparatus in Claim 7 in which overbookings are accepted by artificially increasing the number of rooms available in each room type, depending on the accepted level of overbooking accepted.

12. The apparatus in Claim 7 for hotels having more than one type of rooms with a provision to allow upgrades. The hotel can upgrade and offer a high-price room to the customer, which given an even large flexibility to fix rooms by shifting customers to other compatible types.
